# EUROPÄISCHE PATENTSCHRIFT

(11) **EP 3 841 366 B1**
(45) Veröffentlichungstag und Bekanntmachung des Hinweises auf die Patenterteilung: **30.08.2023**
(21) Anmeldenummer: 19740544.2
(22) Anmeldetag: 15.07.2019
(51) Int. Cl.: G01M 5/00, G01M 13/02, G01M 13/04, G01M 15/00, G05B 23/02, G07C 5/08

(54) **VERFAHREN UND SYSTEM ZUR UNMITTELBAREN ERMITTLUNG EINER THEORETISCHEN SCHÄDIGUNG MINDESTENS EINER KOMPONENTE EINER VORRICHTUNG**
METHOD AND SYSTEM FOR DIRECT DETERMINATION OF THEORETICAL DAMAGE TO AT LEAST ONE COMPONENT OF A DEVICE
PROCÉDÉ ET SYSTÈME POUR LA DÉTERMINATION DIRECTE D'UN ENDOMMAGEMENT THÉORIQUE D'AU MOINS UN ORGANE D'UN DISPOSITIF

(30) Priorität: 21.08.2018 DE 102018214099
(43) Veröffentlichungstag der Anmeldung: 30.06.2021
(73) Patentinhaber: ZF Friedrichshafen AG, 88046 Friedrichshafen (DE)
(72) Erfinder: SCHÄFER, Johannes, 88048 Friedrichshafen (DE); STICKER, Marco, 78199 Bräunlingen (DE)
(86) Internationale Anmeldenummer: PCT/EP2019/068933
(87) Internationale Veröffentlichungsnummer: WO 2020/038654

(56) Entgegenhaltungen:
- DE-A1- 10 257 793
- DE-A1- 19 850 881
- DE-A1-102015 222 324
- US-A1- 2014 379 199

## Beschreibung

Die vorliegende Erfindung betrifft ein Verfahren zur unmittelbaren Ermittlung einer theoretischen Schädigung mindestens einer Komponente einer Vorrichtung, ein System zur Durchführung dieses Verfahrens sowie ein Computerprogrammprodukt.

Aus der DE 10 2012 218 899 A1 ist ein Verfahren zur Ermittlung einer Restlebensdauer von antriebs- und/oder steuerungsspezifischen Bauteilen eines Kraftfahrzeuges bekannt. Zunächst werden antriebs- und/oder steuerungsspezifische Daten, wie Motormoment, Ganginformation, Drehzahl, Bremskraft oder dergleichen zumindest eines antriebs- und/oder steuerungsspezifischen Bauteils erfasst. Die erfassten antriebs- und/oder steuerungsspezifischen Daten werden aufgezeichnet, sodass nachfolgend eine Schädigung des zumindest einen antriebs- und/oder steuerungsspezifischen Bauteils anhand der aufgezeichneten Daten berechnet werden. Schließlich wird die Restlebensdauer des zumindest einen antriebs- und/oder steuerungsspezifischen Bauteils anhand der berechneten Schädigung ermittelt.

DE 102 57 793 A1 offenbart ein Schädigungsbestimmungsverfahren basiered auf Lastkollektiven und auf einer Schadensakkumulationshypothese nach Palmgren/Miner und Wöhler. Weiterer Stand der Technik ist aus DE 198 50 881 A1, US 2014/379199 A1 und DE 10 2015 222324 A1 bekannt.

Der vorliegenden Erfindung liegt ausgehend vom Stand der Technik die Aufgabe zu Grunde, ein optimiertes Verfahren und System zur Restlebensdauerberechnung zu schaffen, und insbesondere eine schnellere Schädigungsberechnung während eines Betriebs zu realisieren. Die Aufgabe wird gelöst durch den Gegenstand der Patentansprüche 1 und 9-11. Weitere vorteilhafte Ausführungsformen sind den abhängigen Ansprüchen zu entnehmen.

Nach einem erfindungsgemäßen Verfahren zur unmittelbaren Ermittlung einer theoretischen Schädigung mindestens einer Komponente einer Vorrichtung werden lastspezifische Referenzdaten der mindestens einen Komponente in einer Auswerteeinheit bereitgestellt, wobei lastspezifische Ist-Daten durch ein Lasterfassungssystem erfasst und an die Auswerteeinheit übermittelt werden, wobei die auf der Auswerteeinheit bereitgestellten lastspezifischen Referenzdaten auf die lastspezifischen Ist-Daten skaliert werden, um die theoretische Schädigung der mindestens einen Komponente zu berechnen und eine Restlebensdauer zu ermitteln. Mit anderen Worten ermöglicht das Verfahren eine direkte Berechnung der theoretischen Schädigung der zumindest einen Komponente. Die theoretische Schädigung setzt sich aus einer Vielzahl von Schädigungswerten der zumindest einen Komponente zusammen und dient zur Abschätzung einer realen Schädigung der zumindest einen Komponente. Mit anderen Worten wird die reale Schädigung der zumindest einen Komponente theoretisch quantifiziert. Mithin wird ein schnelles, quasi-echtzeitfähiges Berechnungsverfahren vorgeschlagen, um die theoretische Schädigung beziehungsweise die Restlebensdauer eines oder mehrerer Komponenten der Vorrichtung unmittelbar zu ermitteln. Besonders vorteilhaft ist der vergleichsweise geringe erforderliche Rechenaufwand während eines Betriebs der Vorrichtung gegenüber aus dem Stand der Technik bekannten Verfahren. Anders gesagt ist lediglich in der Planung und Entwicklung der Vorrichtung ein höherer, dafür aber einmaliger Rechenaufwand erforderlich.

Unter der zumindest einen Komponente der Vorrichtung ist insbesondere ein antriebs- und/oder steuerungsspezifisches Bauteil der Vorrichtung zu verstehen, welches während des Betriebs der Vorrichtung bevorzugt konstanten oder zyklischen Belastungen ausgesetzt ist, sowie in bestimmten Intervallen Wartungs- und/oder Instandhaltungsmaßnahmen unterzogen wird. Mithin kann die Vorrichtung mehrere solcher Bauteile umfassen. Die Vorrichtung kann beispielsweise ein Getriebe oder ein Motor sein, wobei die Komponente ein Bauteil des Getriebes oder des Motors ist. Beispielsweise ist die Komponente eine An- oder Abtriebswelle, ein Lagerelement, ein Zahnrad oder ein ähnliches Bauteil. Ferner kann die zumindest eine Komponente, deren theoretische Schädigung und Restlebensdauer ermittelbar ist, auch ein Betriebsmittel, wie beispielsweise ein Öl sein, das dazu neigt, im Verlauf des Betriebs der Vorrichtung zu altern oder zu verschleißen. Mit anderen Worten weist die Vorrichtung vorzugsweise eine Vielzahl von Komponenten auf, die für den Betrieb der Vorrichtung relevant sind, und aufgrund auftretender Schädigungen negativen Einfluss auf den Betrieb nehmen und daher zu überwachen sind.

Die lastspezifischen Referenzdaten werden bereits vorab mittels eines beliebigen Berechnungsverfahrens ermittelt, wobei alle relevanten und/oder möglichen Laststufen, die während des Betriebs der Vorrichtung auftreten können, definiert und berücksichtigt werden. Anders gesagt werden die lastspezifischen Referenzdaten berechnet, bevor die Vorrichtung im Feld, das heißt im tatsächlichen Betrieb ist. Die lastspezifischen Referenzdaten können beispielsweise in einem frühen Entwicklungsstadium der Vorrichtung berechnet werden, um bereits frühzeitig auf die Auslegung der Komponenten Einfluss nehmen zu können. Dies ermöglicht insbesondere eine Reduzierung der Kosten, da komplexe und rechenintensive Berechnungen der Schädigung und Restlebensdauer nur einmalig für alle zu erwartenden Lastpunkte durchgeführt, und somit auf kostenintensive Lizenzen, beispielsweise für CAE-Software verzichtet werden kann. Somit werden die lastspezifischen Referenzdaten vorab ermittelt und auf der Auswerteeinheit der Vorrichtung hinterlegt. Dies kann auf beliebig viele gleichartige oder ähnliche Vorrichtungen erweitert werden, ohne den genannten Kostenaufwand zu erhöhen. Des Weiteren sind die vordefinierten Betriebspunkte, Fehlermechanismen und/oder Berechnungsmethoden nicht in der Vorrichtung direkt, universell und nachvollziehbar hinterlegt, sondern es wird lediglich eine Datenbank zur Durchführung des Verfahrens genutzt. Das Verfahren bietet somit die Möglichkeit, Vorrichtungen in einer Flotte bezüglich ihrer Schädigung bewertbar zu machen. Daraus ergeben sich Möglichkeiten auch die Flotte optimiert zu betreiben, beispielsweise im Hinblick auf eine gleichmäßige Auslastung aller Vorrichtungen, um die Vorrichtungen gleichmäßig zu belasten und auszunutzen. Dadurch erreicht jede Vorrichtung die vorgesehene Lebensdauer mit höherer Wahrscheinlichkeit und zu einem kontrollierbaren Zeitpunkt.

Zur Ermittlung der Referenzdaten werden beliebig viele Betriebspunkte oder Referenzlasten in der Vorabberechnung definiert. Diese Betriebspunkte sind theoretisch auftretende Lastpunkte und umfassen beispielsweise im Betrieb zu erwartende Belastungen, Drehzahlen, Drehmomente, Temperaturen, Drehrichtungen von Komponenten, Reibungswerte und weitere schädigungsrelevante Betriebspunkte. Anders gesagt wird für die Vorrichtung vorab ein bestimmter Belastungshorizont definiert, den die Vorrichtung beziehungsweise die zumindest eine Komponente während des Betriebs erwartungsgemäß durchläuft. Somit werden für jede Komponente schädigungsrelevante Betriebspunkte und Lastpfade zur Berechnung der theoretischen Schädigung vorab definiert. Daher kann die theoretische Schädigung jeder Komponente vorab für jeden beliebigen Betriebspunkt ermittelt werden. Diese Referenzdaten werden auf der Auswerteeinheit gespeichert bereitgestellt, sodass sie zur Berechnung der theoretischen Schädigung während des Betriebs auf die lastspezifischen Ist-Daten der Vorrichtung skalierbar sind. Die Auswerteeinheit ist vorzugsweise in der Vorrichtung angeordnet. Es ist auch denkbar, dass die Auswerteeinheit eine externe Einrichtung ist, welches die lastspezifischen Ist-Daten der Vorrichtung mittels Kabel oder kabellos empfangen und speichern kann.

Vorzugsweise umfassen die lastspezifischen Referenzdaten zumindest einen Fehlermechanismus der zumindest einen Komponente. Unter dem Begriff Fehlermechanismus ist ein theoretischer Belastungsverlauf zu verstehen, der zu einer Schädigung und schließlich zum Ausfall oder zum Versagen der zumindest einen Komponente führt. Jede unterschiedliche Komponente weist einen oder mehrere Fehlermechanismen auf, die im Betrieb der Vorrichtung theoretisch auftreten können und zur Ermittlung der lastspezifischen Referenzdaten vorab definiert werden. Anders gesagt wird für jeden Fehlermechanismus der zumindest einen Komponente ein theoretischer Schädigungswert für jede beliebige Referenzlast berechnet und in der Auswerteeinheit hinterlegt. Beispielsweise kann ein Zahn eines Zahnrades drei Fehlermechanismen aufweisen - zunächst ein Versagen durch Zahnfußbruch und darüber hinaus ein Zahnflankenversagen (Pitting) einer jeden Zahnflanke eines Zahns. Die theoretische Schädigung lässt sich somit für jeden einzelnen Fehlermechanismus der zumindest einen Komponente unter Berücksichtigung der für den Fehlermechanismus relevanten Referenzlaststufen vorab berechnen.

Bevorzugt umfassen die lastspezifischen Referenzdaten eine Vielzahl von Schädigungswerten für diskrete Referenzlaststufen. Für jeden einzelnen Fehlermechanismus der zumindest einen Komponente wird in der Vorabberechnung ein theoretischer Schädigungswert für jede diskrete Referenzlaststufe berechnet, der auf die lastspezifischen Ist-Daten skalierbar ist. Ferner können in der Vorauslegung Kollektivannehmen getroffen werden, die zur Berechnung des theoretischen Schädigungswerts verwendet werden.

Ferner bevorzugt werden die lastspezifischen Referenzdaten in zumindest einer Datenstruktur zusammengefasst. In der Datenstruktur wird jeder vorher definierte Fehlermechanismus bei jeder Referenzlaststufe in jedem vorher bestimmten Betriebspunkt aufgeführt. Vorzugsweise sind alle zu berücksichtigenden Komponenten der Vorrichtung in der Datenstruktur erfasst. Ferner ist denkbar, dass jede Komponente mit den dazugehörigen Fehlermechanismen, Betriebspunkten und Referenzlaststufen in einer eigenen separaten Datenstruktur aufgeführt ist, wobei die Datenstrukturen in diesem Fall logisch miteinander verknüpft sind.

Die lastspezifischen Ist-Daten werden von dem Lasterfassungssystem kontinuierlich oder in bestimmten Zeitabständen erfasst und an die Auswerteeinheit übermittelt und dort abgespeichert. Die lastspezifischen Referenzdaten werden dann auf die lastspezifischen Ist-Daten skaliert, um die aktuelle theoretische Schädigung der jeweiligen Komponente zu ermitteln.

Gemäß der beanspruchten Erfindung umfassen die lastspezifischen Ist-Daten klassierte Lastkollektive. Die mittels des Lasterfassungssystems erfassten Messgrößen werden in der Auswerteeinheit umgerechnet und in klassierten Lastkollektiven bereitgestellt, sodass eine Berechnung der theoretischen Schädigung mit geringem Rechenaufwand möglich ist. Ein Lastkollektiv oder Beanspruchungskollektiv ist ein Datensatz, welcher die Beanspruchung der zumindest einen Komponente oder mehrerer beispielsweise in Wirkverbindung miteinander stehender Komponenten eines Systems, zum Beispiel eines Motors oder eines Getriebes, in einem bestimmten Betriebszeitraum der Vorrichtung abbildet. Beispielsweise wird der Verlauf einer Messgröße über die Zeit oder die Häufigkeit, in der diese Messgröße auftritt, aufgetragen. So kann in einem Lastkollektiv einer Windkraftanlage ein Datensatz einer Drehzahl/Drehmomentkombination inklusive der aufgetretenen Häufigkeit der jeweiligen Kombination abgebildet werden.

Die klassierten Lastkollektive umfassen eine Verweildauer von auftretenden Schädigungsgrößen in definierten Referenzlaststufen. Weiterhin umfassen die klassierten Lastkollektive eine Anzahl von Lastwechseln von auftretenden Schädigungsgrößen und eine Eventzählung von auftretenden Schädigungsgrö-ßen. Bei der Eventzählung wird ein bestimmtes auftretendes Ereignis während des Betriebs der Vorrichtung von dem Lasterfassungssystem registriert und die Häufigkeit des Auftretens gezählt. Dieses Ereignis ist somit auch ein Betriebspunkt, der nach seiner Art und Dauer vorab definiert und auf der Auswerteeinheit hinterlegt ist. Es kann sich dabei um ein sogenanntes Sonderevent handeln, bei dem ein bestimmter theoretisch auftretender Betriebspunkt außerhalb der zu erwartenden Betriebspunkte liegt. Es handelt sich somit um ein Ausnahmeereignis, welches während des Betriebs ausnahmsweise auftreten kann, jedoch eine reale Schädigung der jeweiligen Komponente hervorruft. Diese reale Schädigung wird in der Vorabberechnung theoretisch quantifiziert. In einem solchen Fall wird jedes Auftreten dieses Ereignisses gezählt, wobei bei Erreichen einer maximalen Anzahl davon ausgegangen wird, dass der Schaden der jeweiligen Komponente ein vordefiniertes Maß theoretisch überschritten hat und somit beispielsweise auszutauschen oder zu schonen ist. Ferner können die klassierten Lastkollektive als Überrollungskollektiv oder Rainflow-Klassierung von der Auswerteeinheit aufgezeichnet werden.

Die für die Schädigung relevanten Größen werden tatsächlich von dem Lasterfassungssystem erfasst und sind Messgrößen, die den lastspezifischen Referenzdaten gegenübergestellt werden können. Mit anderen Worten ist jede mögliche Einflussgröße und ihre Auswirkung im Hinblick auf die theoretische Schädigung bereits in den lastspezifischen Referenzdaten erfasst beziehungsweise abgebildet. Die theoretische Schädigung ist eine real auftretende Schädigung, welche theoretisch quantifiziert wird. Damit lassen sich die lastspezifischen Referenzdaten auf die lastspezifischen Ist-Daten skalieren um die theoretische Schädigung der zumindest einen Komponente zu ermitteln. Die Berechnung der theoretischen Schädigung kann zu einem beliebigen Zeitpunkt während des Betriebs der Vorrichtung erfolgen. Somit können mit dem erfindungsgemäßen Verfahren direkt, also unmittelbar Aussagen über einen aktuellen Schädigungswert und/oder eine Restlebensdauer der jeweiligen Komponente getroffen werden, die eine bessere Anpassung von wirtschaftlichen Betriebsstrategien der Vorrichtung ermöglicht. So können in der Vorrichtungsplanung für unterschiedliche, zukünftig zu erwartende Betriebsstrategien Bauteiloptimierungen vorgenommen werden, wobei insbesondere aufgrund der im Betrieb ermittelten theoretischen Schädigungen und Restlebensdauern zukünftige Bauteilschädigungen und Belastungen prognostizierbar sind.

Die Lastkollektive können eine oder mehrere Dimensionen aufweisen. Die Dimensionen sind beispielsweise abhängig von den für einen Fehlermechanismus der zumindest einen Komponente relevanten Einflussgrößen. Sind beispielsweise die Drehzahl und das Drehmoment für einen Fehlermechanismus der zumindest einen Komponente relevant, ist das Lastkollektiv zweidimensional. Es können aber auch drei oder mehr Dimensionen vorgesehen sein. Somit kann beispielsweise für den jeweiligen betrachteten Messzeitraum eine Verweildauer ausgegeben werden, bei der die zumindest eine Komponente, hier zum Beispiel eine Welle, während des Betriebs in einer bestimmten Drehzahl/ Drehmomentkombination vorlag. Mithin sind diese tatsächlich erfassten Drehzahl/Drehmomentkombinationen die lastspezifischen Ist-Daten. Für jede dieser Drehzahl/Drehmomentkombination sind in der Auswerteeinheit lastspezifische Referenzdaten mit dazugehörigen theoretischen Schädigungswerten hinterlegt, die auf die lastspezifischen Ist-Daten skaliert werden, um die theoretische Schädigung der zumindest einen Komponente für den Messzeitraum zu ermitteln. Diese theoretische Schädigung der zumindest einen Komponente kann anschließend mit weiteren Schädigungswerten vorheriger Berechnungen aufsummiert werden, um eine Gesamtschädigung der zumindest einen Komponente zu berechnen. Mit anderen Worten wird das aufgezeichnete Lastkollektiv mit der Datenstruktur bewertet um eine aktuelle theoretische Schädigungssumme der zumindest einen Komponente zu erhalten. Insbesondere werden zunächst die Lastkollektive summiert, um dann die theoretische Schädigung zu bestimmen.

Gemäß einem bevorzugten Ausführungsbeispiel wird in der Auswerteeinheit zumindest ein Ausfallkriterium der mindestens einen Komponente bereitgestellt. Für jeden Fehlermechanismus der zumindest einen Komponente wird vorab ein Ausfallkriterium definiert und in der Auswerteeinheit hinterlegt. Dieses Ausfallkriterium kann ebenfalls in der Datenstruktur bereitgestellt werden. Dabei wird festgelegt, nach welchen Kriterien die jeweilige Komponente in Abhängigkeit des Fehlermechanismus auszutauschen ist. Ein solches Kriterium kann beispielsweise eine gewisse Anzahl an Überrollungen von Lagerelementen oder eine gewisse Verweildauer der Komponente in einer bestimmten Laststufe oder bei einem bestimmten Betriebspunkt sein. Im Allgemeinen ist das Ausfallkriterium jedoch ein Schädigungswert, ab dem die Komponente theoretisch ihr Lebensdauer erreicht hat. Ausfallkriterien können beispielsweise anhand von Wöhler-Kurven vorab definiert werden. Es ist aber auch möglich die Ausfallkriterien anhand von Erfahrungswerten oder mathematisch empirischen Verfahren abzuschätzen beziehungsweise zu ermitteln. Das Ausfallkriterium ist erfüllt, wenn ein bestimmter theoretischer Schädigungswert der Komponente auftritt und beispielsweise ein Austausch der Komponente erforderlich ist. Dies ist insbesondere aus Sicherheitsaspekten von Vorteil, da vor Erreichen des jeweiligen Ausfallkriteriums Reparaturmaßnahmen eingeleitet werden können.

Aus dem Verhältnis der aktuellen Gesamtschädigung der zumindest einen Komponente und dem definierten Ausfallkriterium für den jeweiligen Fehlermechanismus lassen sich ferner Aussagen über die Restlebensdauer der Komponente treffen. Dies erfolgt insbesondere durch Extrapolation der aktuellen theoretischen Schädigung. Mit anderen Worten ist mit diesem Verhältnis die verbleibende Belastbarkeit der jeweiligen Komponente errechenbar. Somit kann eine theoretische Schädigung und eine Restlebensdauer der zumindest einen Komponente quasi in Echtzeit oder zu jedem beliebigen Zeitpunkt ermittelt werden. Vorteilhaft ist dabei insbesondere, dass die theoretische Schädigung mehrerer Komponenten gleichzeitig überwacht und ganzheitlich bewertet werden kann.

Vorzugsweise wird in der Auswerteeinheit zumindest ein Schädigungsschwellwert bereitgestellt, sodass bei einem Erreichen des Schädigungsschwellwerts eine Handlungsaufforderung von der Auswerteeinheit an zumindest eine Empfängereinheit gesendet wird. Der Schädigungsschwellwert dient insbesondere dazu, anzuzeigen, wann die zumindest eine Komponente einen kritischen Schädigungsbereich erreicht hat. Dieser kann nach einem bevorzugten Beispiel 80% der Gesamtlebensdauer der jeweiligen Komponente betragen. Mit anderen Worten ist der Schädigungsschwellwert ein Schädigungswert, der eine geringere theoretische Schädigung als das Ausfallkriterium aufweist. Das Erreichen des Schädigungsschwellwerts wird auf der Empfängereinheit, das beispielsweise als Rechnersystem oder mobiles Endgerät ausgebildet ist, angezeigt. Unter der Handlungsaufforderung ist insbesondere eine Aufforderung zur Einleitung einer Wartungs- oder Reparaturmaßnahme zu verstehen. Das Empfängergerät wird dabei beispielsweise mittels einer Steckverbindung mit der Auswerteeinheit verbunden. Alternativ ist denkbar, dass die Auswerteeinheit eine Sendeeinheit umfasst, um kabellos, beispielsweise mittels Funkverbindung mit der Empfängereinheit verbunden zu werden. Die Empfängereinheit ist vorzugsweise innerhalb der Vorrichtung beziehungsweise Anlage angeordnet. Es ist auch denkbar, dass die Empfängereinheit eine externe Einrichtung ist. Ferner alternativ kann die Empfängereinheit ein Cloudspeicher oder ein Gateway sein. Somit können die Daten auch auf einer virtuellen Empfängereinheit gespeichert werden.

Des Weiteren bevorzugt erfolgt ein Betrieb der Vorrichtung in Abhängigkeit der theoretischen Schädigung der zumindest einen Komponente. Im Laufe des Betriebs der Vorrichtung kann es dazu kommen, dass Komponenten der Vorrichtung unterschiedlich stark abnutzen, beschädigt werden oder verschleißen. Mit anderen Worten weisen diese Komponenten unterschiedliche theoretische Schädigungssummen auf. Da die theoretische Schädigung jeder relevanten Komponente durch das Verfahren quasi in Echtzeit ermittelt werden kann, wird die Betriebsstrategie der Vorrichtung schädigungsabhängig angepasst. Mithin erfolgt somit eine Entscheidung über die Betriebsstrategie aufgrund von Schädigungen der zumindest einen Komponente und kann daher optimiert für den Betrieb eingestellt werden.

Vorzugsweise werden bestimmte Betriebspunkte in Abhängigkeit der theoretischen Schädigung der mindestens einen Komponente vermieden. Mit anderen Worten wird die jeweilige Komponente diesen Betriebspunkten nicht oder nur teilweise oder nur kurzeitig ausgesetzt. Dabei kann es sich bei den Betriebspunkten beispielsweise um bestimmte Drehzahl- oder Drehmomentkombinationen oder im Falle eines Getriebes auch um jeweilige Gänge des Getriebes handeln. Dies soll am Beispiel eines Mehrganggetriebes veranschaulicht werden, wobei die jeweiligen Komponenten des Getriebes, beispielsweise Zahnräder oder Wellen, in jedem Lastpfad beziehungsweise Gang unterschiedlich belastet werden und somit unterschiedliche Schädigungssummen aufweisen. Weist einer der Gänge eine oder mehrere Komponenten mit einer größeren Schädigungssumme auf als andere Gänge, kann eben dieser Gang zum Beispiel nur für eine kürzere Zeit genutzt werden. Mithin werden die anderen nicht betroffenen Gänge im Umkehrschluss länger genutzt. Alternativ wird auf diesen Gang je nach Anwendungsfall komplett verzichtet, um eine weitere Schädigung der zumindest teilweise geschädigten Komponenten zu vermeiden beziehungsweise zu reduzieren. Somit kann eine Schädigung aller relevanten Komponenten gleichmäßiger gestaltet werden, um die Lebensdauer der Komponenten und schließlich auch der Vorrichtung zu erhöhen. Anders gesagt werden geschädigte Komponenten durch das Vermeiden bestimmter Betriebspunkte in Abhängigkeit der theoretischen Schädigung geschont. Ferner kann die Vorrichtung länger störungsfrei genutzt werden. Ergänzend oder alternativ können auch Lastbereiche oder Lastpfade von Schädigungswerten in Abhängigkeit der theoretischen Schädigung vermieden werden.

Das Verfahren gemäß der Erfindung wird von einem Computer beziehungsweise von der Auswerteeinheit ausführt. Somit kann das Verfahren in Software implementiert sein. Die entsprechende Software ist insofern ein eigenständig verkaufsfähiges Produkt. Daher bezieht sich die Erfindung auch auf ein Computerprogrammprodukt gemäß Anspruch 11.

Ein erfindungsgemäßes System zur unmittelbaren Ermittlung einer theoretischen Schädigung mindestens einer Komponente einer Vorrichtung ist in Anspruch 9 definiert.

Das Lasterfassungssystem ist bevorzugt ein Teil der Vorrichtungssteuerung und umfasst ferner bevorzugt eine Vielzahl von Sensorelementen, die dazu vorgesehen sind, schädigungsrelevante Messgrößen zu erfassen und an die Auswerteeinheit zu übermitteln. So können beispielsweise Beschleunigungssensoren, optische Sensoren, Dehnungsmessstreifen oder weitere geeignete Sensorelemente im Lasterfassungssystem integriert sein. Diese Messgrößen werden von der Auswerteeinheit empfangen und zu den lastspezifischen Ist-Daten umgerechnet und abgespeichert, sodass im Nachgang die theoretische Schädigung der jeweiligen Komponente ermittelbar ist. Alternativ oder ergänzend kann das Lasterfassungssystem auch geschätzte oder vorher berechnete Messgrößen an die Auswerteeinheit liefern, mit denen die theoretische Schädigung der jeweiligen Komponente berechnet wird.

Das erfindungsgemäße System eignet sich insbesondere für die Verwendung in einer Windkraftanlage. Alternativ ist das System beispielsweise in einer Arbeitsmaschine, einer Baumaschine, einem PKW, einem NKW oder einem LKW einsetzbar, wobei das System vorteilhafterweise in solchen Geräten und Maschinen zum Einsatz kommt, die aufgrund ihrer Bauart, Baugröße sowie ihres Einsatzgebiets Komponenten und/oder Verschleißteile aufweisen, die insbesondere nur unter größerem Aufwand zugänglich sind und regelmäßig wiederkehrenden Wartungs- und Instandhaltungszyklen unterliegen.

Im Folgenden wird ein bevorzugtes Ausführungsbeispiel der Erfindung anhand der Zeichnungen näher erläutert. Hierbei zeigt
- Fig. 1: eine vereinfachte schematische Teildarstellung einer Windkraftanlage mit einem erfindungsgemäßen System zur unmittelbaren Ermittlung einer theoretischen Schädigung einer Komponente der Windkraftanlage,
- Fig. 2: ein Diagramm zur Veranschaulichung eines Datensatzes von normierten Drehzahlen und Drehmomenten der Komponente der Windkraftanlage,
- Fig. 3: ein Diagramm zur Veranschaulichung einer Anzahl von Lastwechseln der Komponente der Windkraftanlage in Abhängigkeit des Drehmoments gemäß Fig. 2,
- Fig. 4: ein Diagramm zur Veranschaulichung des theoretischen Schädigungswertes für einen Fehlermechanismus der Komponente der Windkraftanlage, und
- Fig. 5: ein Diagramm zur Veranschaulichung des theoretischen Schädigungswerts für die Komponente der Windkraftanlage.

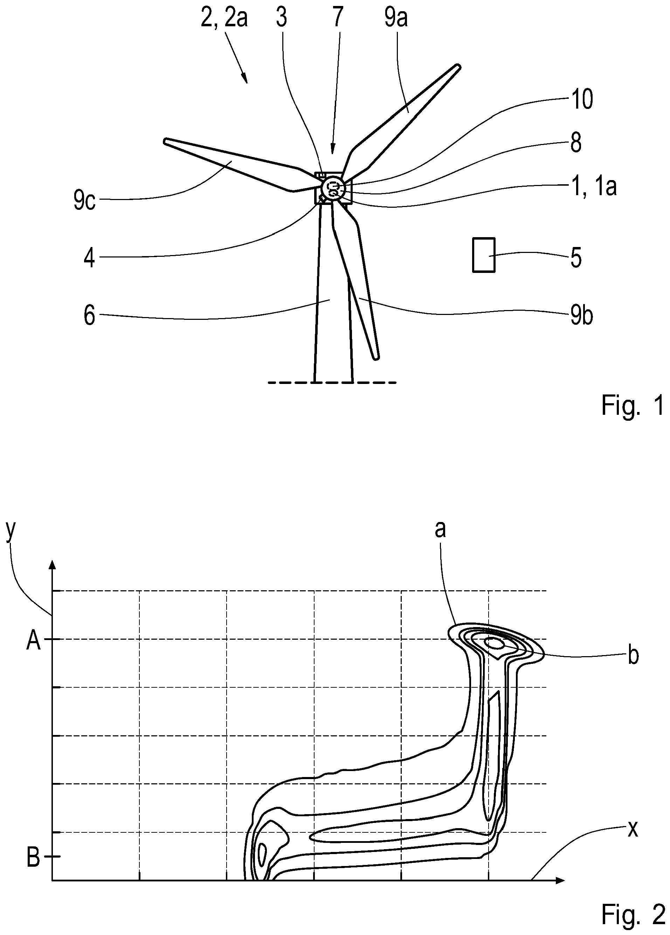

Gemäß Fig. 1 weist eine erfindungsgemäße Windkraftanlage 2a einen Turm 6 mit einer horizontal drehbar gelagerten Gondel 7 auf. Die Gondel 7 umfasst einen - hier nicht weiter dargestellten - Rotor mit einer - vorliegend gestrichelt angedeuteten - drehbaren Rotorwelle 10, die zumindest mit einer Rotornabe 8 und ferner mit einer zu überwachenden Komponente 1, vorliegend einem Zahnrad 1a, wirkverbunden ist. Das Zahnrad 1a befindet sich in einem - hier nicht näher dargestellten - Getriebe der Windkraftanlage 2a und steht zur Übertragung eines Drehmoments und einer Drehzahl mit einem weiteren - hier nicht gezeigten - Zahnrad im Zahneingriff. An der Rotornabe 8 sind vorliegend drei zumindest teilweise drehbar gelagerte Rotorblätter 9a, 9b, 9c angeordnet. Ferner umfasst die Windkraftanlage 2a ein erfindungsgemäßes System zur unmittelbaren Ermittlung einer theoretischen Schädigung einer Komponente 1, vorliegend das Zahnrad 1a, der Windkraftanlage 2a. Alternativ kann das erfindungsgemäße System auch in anderen Vorrichtungen Verwendung finden, um dort die theoretische Schädigung mindestens einer Komponente zu ermitteln.

Das erfindungsgemäße System umfasst eine Auswerteeinheit 3, die dazu vorgesehen ist, lastspezifische Referenzdaten bereitzustellen, und ein Lasterfassungssystem 4 zur Erfassung von lastspezifischen Ist-Daten. Die lastspezifischen Ist-Daten sind dazu vorgesehen, an die Auswerteeinheit 3 übermittelt zu werden, wobei die Auswerteeinheit 3 dazu vorgesehen ist, die lastspezifischen Referenzdaten auf die lastspezifischen Ist-Daten zu skalieren, um daraus die theoretische Schädigung und eine Restlebensdauer des Zahnrades 1a zu ermitteln.

Gemäß einem erfindungsgemäßen Verfahren zur unmittelbaren Ermittlung der theoretischen Schädigung der Komponente 1 der Vorrichtung 2, nämlich des Zahnrades 1a, werden zunächst lastspezifische Referenzdaten in der Auswerteeinheit 3 bereitgestellt. Diese lastspezifischen Referenzdaten umfassen zumindest einen Fehlermechanismus der Komponente 1 sowie eine Vielzahl von Schädigungswerten für diskrete Referenzlaststufen, wobei die diskreten Referenzlaststufen alle theoretisch während des Betriebs der Windkraftanlage 2a auftretenden Lasten und Betriebszustände umfassen. Ein Fehlermechanismus des Zahnrades 1a ist beispielsweise ein Zahnfußbruch oder sogenanntes Pitting an den Zahnflanken. Da jeder Zahn des Zahnrades 1a zwei Zahnflanken und einen Zahnfuß aufweist, weist das Zahnrad drei schädigungsrelevante Fehlermechanismen auf. Ferner werden die lastspezifischen Referenzdaten in einer Datenstruktur zusammengefasst. Beispielsweise werden die lastspezifischen Referenzdaten in einer Schädigungsmatrix zusammengefasst. Mithin sind die lastspezifischen Referenzdaten des Zahnrads 1a, beispielsweise die Anzahl der Lastwechsel oder eine Verweildauer bei einem bestimmten Drehmoment, in der Schädigungsmatrix aufgenommen.

In einem weiteren Verfahrensschritt werden lastspezifische Ist-Daten durch das Lasterfassungssystem 4 erfasst und an die Auswerteeinheit 3 übermittelt. Die lastspezifischen Ist-Daten umfassen klassierte Lastkollektive. Die klassierten Lastkollektive umfassen eine Verweildauer von auftretenden Schädigungsgrößen in definierten Referenzlaststufen sowie eine Anzahl von Lastwechseln von auftretenden Schädigungsgrößen. Zur Berechnung der theoretischen Schädigung der Komponente 1 werden die lastspezifischen Referenzdaten in der Auswerteinheit 3 auf die lastspezifischen Ist-Daten skaliert, wobei dadurch beispielsweise eine theoretische Restlebensdauer des Zahnrads 1a ermittelt werden kann. Ferner wird in der Auswerteeinheit 3 zumindest ein Ausfallkriterium des Zahnrades 1a bereitgestellt, wobei ein Erreichen des Ausfallkriteriums eine theoretische Vollschädigung des Zahnrades 1a definiert. Mit anderen Worten ist des Zahnrades 1a bei Erreichen des Ausfallkriteriums theoretisch derart beschädigt, dass ein weiterer Betrieb des Zahnrades 1a in der Windkraftanlage 2a theoretisch nicht mehr möglich ist und somit das Zahnrad 1a theoretisch ausgefallen ist. Daher wird in der Auswerteeinheit 3 ein Schädigungsschwellwert bereitgestellt, sodass bei einem Erreichen des Schädigungsschwellwerts eine Handlungsaufforderung von der Auswerteeinheit 3 an zumindest eine Empfängereinheit 5 gesendet wird.

Die Empfängereinheit 5 befindet sich vorliegend außerhalb der Windkraftanlage 2a, vorzugsweise bei einem Betreiber der Windkraftanlage 2a. Beispielsweise ist der Schädigungsschwellwert bei einer theoretischen Schädigung der Komponente 1 von 80% gesetzt. Somit kann der Betreiber der Windkraftanlage 2a eine Wartung und einen Austausch des Zahnrades 1a rechtzeitig planen. Die Betriebsstrategie der Windkraftanlage 2a wird mithin hinsichtlich Wartungszeitpunkt, Lebensdauer, Ersatzbeschaffung und Wirtschaftlichkeitsbetrachtungen optimierbar. Beispielsweise kann der Betreiber der Windkraftanlage 2a den Betrieb der Windkraftanlage 2a derart in Abhängigkeit der theoretischen Schädigung des Zahnrades 1a einstellen, dass bestimmte Betriebspunkte in Abhängigkeit der theoretischen Schädigung des Zahnrades 1a vermieden werden. Beispielsweise kann das Zahnrad 1a derart betrieben werden, dass die Verweildauer bei einem bestimmten Drehmoment verringert oder vermieden wird, um eine stärkere Schädigung der des Zahnrads 1a zu verringern oder zu vermeiden. Das erfindungsgemäße Verfahren bietet dem Betreiber der Windkraftanlage 2a eine quantifizierte Aussage zu einer jeweils aktuellen theoretischen Schädigung des Zahnrades 1a bei gleichzeitig reduzierter Rechenleistung. Ferner kann beispielsweise die eingespeiste elektrische Energie und die dabei entstandene Schädigung für das Zahnrad 1a oder ergänzend auch für andere Komponenten der Windkraftanlage 2a ins Verhältnis gesetzt werden.

Fig. 2 zeigt ein Diagramm zur Veranschaulichung eines Datensatzes von normierten Drehzahlen und Drehmomenten des Zahnrads 1a der Windkraftanlage 2a. Dabei ist auf der Abszisse X die normierte Drehzahl aufgetragen und auf der Ordinate Y ist das normierte Drehmoment aufgetragen. Dem Diagramm ist der Betrieb des Zahnrads 1a in Abhängigkeit der Drehzahl und des Drehmoments zu entnehmen, wobei die Verweildauer eines Betriebszustandes von einem äußeren Kurvenverlauf a zu einem inneren Kurvenverlauf b zunimmt. Der äußere Kurvenverlauf a veranschaulicht den Betrieb des Zahnrads 1a bei einer bestimmten Drehzahl und einem bestimmten Drehmoment mit einer geringen Verweildauer und der innere Kurvenverlauf b veranschaulicht den Betrieb des Zahnrads 1a bei einer bestimmten Drehzahl und einem bestimmten Drehmoment mit einer größeren Verweildauer. Außerhalb des äußeren Kurvenverlaufs a wurde das Zahnrad 1a vorliegend nicht betrieben. Dieses Diagramm stellt somit einen Betrieb entlang einer ausgeprägten Kennlinie oder ein tatsächlich aufgetretenes Lastkollektiv der Windkraftanlage 2a dar.

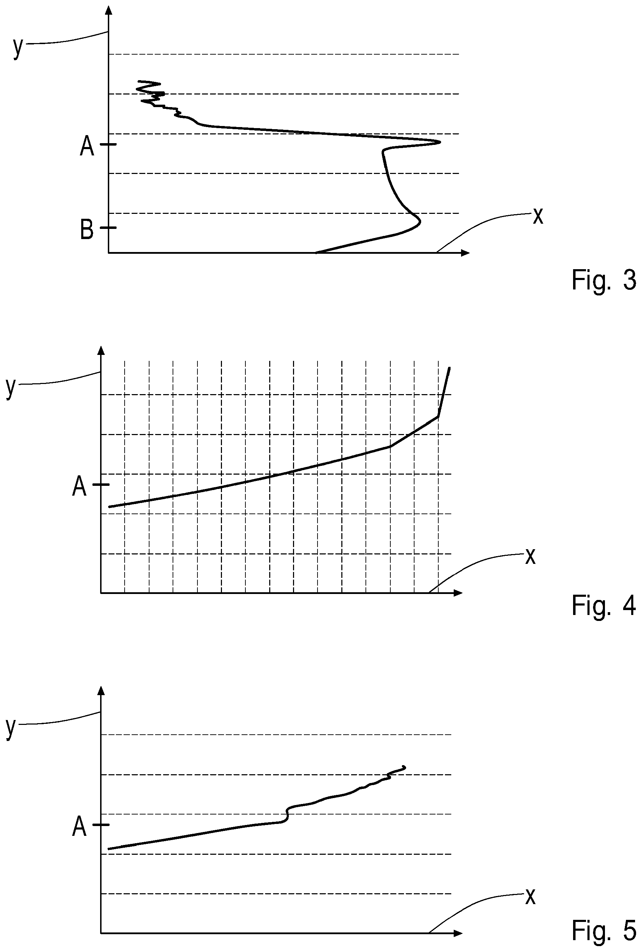

In Fig. 3 ist ein Diagramm zur Veranschaulichung einer Anzahl von Lastwechseln der Komponente der Windkraftanlage in Abhängigkeit des Drehmoments gemäß Fig. 2 dargestellt. Dabei ist auf der Abszisse Xdie Anzahl der Lastwechsel, beziehungsweise die Anzahl der Überrollungen logarithmisch aufgetragen und auf der Ordinate Y ist das Drehmoment aufgetragen. Dem Diagramm ist zu entnehmen, dass das Zahnrad 1a am häufigsten bei einem ersten Drehmoment A betrieben wurde, beziehungsweise dass bei dem ersten Drehmoment A die meisten Überrollungen stattgefunden haben. Bei einem Drehmoment, das größer ist als das erste Drehmoment A, wurde das Zahnrad 1a erheblich seltener betrieben, denn es haben erheblich weniger Überrollungen stattgefunden. Ferner weist die Kurve ausgehend von dem ersten Drehmoment A mit abnehmendem Drehmoment zunächst ein lokales Minimum hinsichtlich der Anzahl der Überrollungen auf und danach ein lokales Maximum hinsichtlich der Anzahl der Überrollungen bei einem zweiten Drehmoment B. Somit wurde das Zahnrad 1a bei dem zweiten Drehmoment B, das kleiner ist als das erste Drehmoment A, am zweithäufigsten betrieben. Das erste und das zweite Drehmoment A, B ist auch in Fig. 3 eingezeichnet, wobei das erste Drehmoment A die maximale Verweildauer aufweist, und wobei das zweite Drehmoment B die zweitgrößte Verweildauer aufweist.

Fig. 4 zeigt ein Diagramm zur Veranschaulichung der Belastbarkeit für einen Fehlermechanismus des Zahnrades 1a der Windkraftanlage 2a. Dabei ist auf der Abszisse X die Schädigung des Zahnrades 1a logarithmisch aufgetragen und auf der Ordinate Y ist das Drehmoment aufgetragen. Die Ordinate Y aus Fig. 4 entspricht der Ordinate aus Fig. 3, wobei das erste Drehmoment A aus Fig. 3 gleich dem ersten Drehmoment A aus Fig. 4 ist. Dem Diagramm ist zu entnehmen, dass mit zunehmendem Drehmoment die theoretische Schädigung des Zahnrades 1a erheblich zunimmt. Vorliegend ist das Diagramm lediglich für einen einzigen Fehlermechanismus, beispielsweise einem Zahnfußbruch, dargestellt. Für weitere Komponenten 1 der Windkraftanlage 2a können auch weitere Fehlermechanismen berechnet werden - je nach Bedarf und Verfügbarkeit von Berechnungsmodellen und je nach Art und Belastung der Komponente 1.

Bei Anwendung des erfindungsgemäßen Verfahrens und Skalieren der lastspezifischen Referenzdaten auf die lastspezifischen Ist-Daten zur Berechnung der theoretischen Schädigung beziehungsweise Schädigungssumme für das Zahnrad 1a und den betrachteten Fehlermechanismus ergibt sich eine spezifische Darstellung, die in Fig. 5 dargestellt ist. Fig, 5 zeigt ein Diagramm zur Veranschaulichung der theoretischen Schädigungssumme für das Zahnrad 1a. Dabei ist auf der Abszisse X die theoretische Schädigung des Zahnrads 1a logarithmisch aufgetragen und auf der Ordinate Y ist das erfasste Drehmoment aufgetragen. Die Ordinate Y aus Fig. 5 entspricht der Ordinate aus Fig. 3 und Fig. 4, wobei das erste Drehmoment A aus Fig. 3 und Fig. 4 gleich dem ersten Drehmoment A aus Fig. 5 ist. Die Abszisse X aus Fig. 5 entspricht nicht der Abszisse X aus Fig. 4. Mit anderen Worten ist auf der Abszisse X aus Fig. 5 ein anderer Wertebereich aufgetragen als auf der Abszisse X aus Fig. 4. Dem Diagramm ist zu entnehmen, dass die größte Schädigung des Zahnrades 1a bei hohen Drehmomenten auftreten. Die theoretische Schädigungssumme kann mit dem theoretischen Ausfall, den erprobten Belastungen und den Erfahrungswerten aus anderen Anlagen abgeglichen werden. Der Ertrag der Windkraftanlage 2a ergibt sich aus der in die Windkraftanlage 2a eingespeisten Energie, nämlich Leistung über Zeit. Bei einer vereinfachten Betrachtung ohne genaue Berücksichtigung von Wirkungsgraden und anderen Faktoren ist der Ertrag somit proportional zur Leistung, die von der Rotorwelle 10 übertragen wird.

Die Erfindung ist nicht beschränkt auf das zuvor beschriebene Ausführungsbeispiel. Beispielsweise kann das System zur unmittelbaren Ermittlung der theoretischen Schädigung mindestens einer Komponente auch in andere Vorrichtungen verwendet werden. Beispielsweise ist die Verwendung des erfindungsgemäßen Systems in einem Getriebe für ein Kraftfahrzeug oder Industriemaschinen denkbar.

### Bezugszeichen

- 1: Komponente
- 1a: Zahnrad
- 2: Vorrichtung
- 2a: Windkraftanlage
- 3: Auswerteeinheit
- 4: Lasterfassungssystem
- 5: Empfängereinheit
- 6: Turm
- 7: Gondel
- 8: Rotornabe
- 9a: Rotorblatt
- 9b: Rotorblatt
- 9c: Rotorblatt
- 10: Rotorwelle

- A: erstes Drehmoment
- B: zweites Drehmoment

- a: äußerer Kurvenverlauf
- b: innerer Kurvenverlauf

- X: Abszisse
- Y: Ordinate

## Patentansprüche

1. Verfahren zur unmittelbaren Ermittlung einer theoretischen Schädigung mindestens einer Komponente (1) einer Vorrichtung (2), umfassend folgende Verfahrensschritte:
- Bereitstellen von lastspezifischen Referenzdaten in einer Auswerteeinheit (3);
- Erfassen von lastspezifischen Ist-Daten durch ein Lasterfassungssystem (4) und Übermitteln an die Auswerteeinheit (3), wobei die lastspezifischen Ist-Daten klassierte Lastkollektive umfassen, die eine Verweildauer von auftretenden Schädigungsgrößen in definierten Laststufen, eine Anzahl von Lastwechseln von auftretenden Schädigungsgrößen sowie eine Eventzählung von auftretenden Schädigungsgrößen umfassen; und
- Skalieren der lastspezifischen Referenzdaten auf die lastspezifischen Ist-Daten zur Berechnung der theoretischen Schädigung der mindestens einen Komponente (1) und Ermittlung einer Restlebensdauer.

2. Verfahren nach Anspruch 1, **dadurch gekennzeichnet, dass** die lastspezifischen Referenzdaten eine Vielzahl von Schädigungswerten für diskrete Referenzlaststufen umfassen.

3. Verfahren nach einem der vorhergehenden Ansprüche, **dadurch gekennzeichnet, dass** die lastspezifischen Referenzdaten zumindest einen Fehlermechanismus der zumindest einen Komponente (1) umfassen.

4. Verfahren nach einem der vorhergehenden Ansprüche, **dadurch gekennzeichnet, dass** die lastspezifischen Referenzdaten in zumindest einer Datenstruktur zusammengefasst werden.

5. Verfahren nach einem der vorhergehenden Ansprüche, **dadurch gekennzeichnet, dass** in der Auswerteeinheit (3) zumindest ein Ausfallkriterium der mindestens einen Komponente (1) bereitgestellt wird.

6. Verfahren nach einem der vorhergehenden Ansprüche, **dadurch gekennzeichnet, dass** in der Auswerteeinheit (3) zumindest ein Schädigungsschwellwert bereitgestellt wird, sodass bei einem Erreichen des Schädigungsschwellwerts eine Handlungsaufforderung von der Auswerteeinheit (3) an zumindest eine Empfängereinheit (5) gesendet wird.

7. Verfahren nach einem der vorhergehenden Ansprüche, **dadurch gekennzeichnet, dass** ein Betrieb der Vorrichtung (2) in Abhängigkeit der theoretischen Schädigung der mindestens einen Komponente (1) erfolgt.

8. Verfahren nach einem der vorhergehenden Ansprüche, **dadurch gekennzeichnet, dass** bestimmte Betriebspunkte in Abhängigkeit der theoretischen Schädigung der mindestens einen Komponente (1) vermieden werden.

9. System zur unmittelbaren Ermittlung einer theoretischen Schädigung mindestens einer Komponente (1) einer Vorrichtung (2) mittels eines Verfahrens nach einem der Ansprüche 1 bis 8, umfassend eine Auswerteeinheit (3), die dazu vorgesehen ist, lastspezifische Referenzdaten bereitzustellen, wobei das System ferner ein Lasterfassungssystem (4) zur Erfassung von lastspezifischen Ist-Daten umfasst, wobei die lastspezifischen Ist-Daten klassierte Lastkollektive umfassen, die eine Verweildauer von auftretenden Schädigungsgrößen in definierten Laststufen, eine Anzahl von Lastwechseln von auftretenden Schädigungsgrößen sowie eine Eventzählung von auftretenden Schädigungsgrößen umfassen, wobei die lastspezifischen Ist-Daten dazu vorgesehen sind, an die Auswerteeinheit (3) übermittelt zu werden, wobei die Auswerteeinheit (3) ferner dazu vorgesehen ist, die lastspezifischen Referenzdaten auf die lastspezifischen Ist-Daten zu skalieren, um daraus die theoretische Schädigung und eine Restlebensdauer der mindestens einen Komponente (1) zu ermitteln.

10. Verwendung des Systems nach Anspruch 9 in einer Windkraftanlage (2a).

11. Computerprogramm, enthaltend maschinenlesbare Anweisungen, die bei Ausführung des Programms durch einen Computer diesen veranlassen, das Verfahren nach einem der Ansprüche 1-8 auszuführen.

## Claims

1. Method for directly determining theoretical damage to at least one component (1) of a device (2), comprising the following method steps:
- providing load-specific reference data in an evaluation unit (3);
- acquiring load-specific actual data by way of a load detection system (4) and transmitting them to the evaluation unit (3), wherein the load-specific actual data comprise classified load spectra that comprise a dwell time of occurring damage variables in defined load stages, a number of load changes of occurring damage variables and an event count of occurring damage variables; and
- scaling the load-specific reference data to the load-specific actual data so as to compute the theoretical damage to the at least one component (1) and determine a remaining service life.

2. Method according to Claim 1, **characterized in that** the load-specific reference data comprise a multiplicity of damage values for discrete reference load stages.

3. Method according to either of the preceding claims, **characterized in that** the load-specific reference data comprise at least one fault mechanism of the at least one component (1).

4. Method according to one of the preceding claims, **characterized in that** the load-specific reference data are combined in at least one data structure.

5. Method according to one of the preceding claims, **characterized in that** at least one failure criterion of the at least one component (1) is provided in the evaluation unit (3).

6. Method according to one of the preceding claims, **characterized in that** at least one damage threshold value is provided in the evaluation unit (3), such that, when the damage threshold value is reached, a call to action is sent from the evaluation unit (3) to at least one receiver unit (5).

7. Method according to one of the preceding claims, **characterized in that** the device (2) is operated on the basis of the theoretical damage to the at least one component (1).

8. Method according to one of the preceding claims, **characterized in that** specific operating points are avoided on the basis of the theoretical damage to the at least one component (1).

9. System for directly determining theoretical damage to at least one component (1) of a device (2) by way of a method according to one of Claims 1 to 8, comprising an evaluation unit (3) that is intended to provide load-specific reference data, wherein the system furthermore comprises a load detection system (4) for acquiring load-specific actual data, wherein the load-specific actual data comprise classified load spectra that comprise a dwell time of occurring damage variables in defined load stages, a number of load changes of occurring damage variables and an event count of occurring damage variables, wherein the load-specific actual data are intended to be transmitted to the evaluation unit (3), wherein the evaluation unit (3) is furthermore intended to scale the load-specific reference data to the load-specific actual data in order to determine therefrom the theoretical damage and a remaining service life of the at least one component (1).

10. Use of the system according to Claim 9 in a wind turbine (2a).

11. Computer program containing machine-readable instructions that, when the program is executed by a computer, prompt said computer to carry out the method according to one of Claims 1-8.

## Revendications

1. Procédé de détermination directe d'une détérioration théorique d'au moins un composant (1) d'un dispositif (2), ledit procédé comprenant les étapes suivantes :
- fournir des données de référence spécifiques à la charge dans une unité d'évaluation (3) ;
- acquérir des données réelles spécifiques à la charge par le biais d'un système d'acquisition de charge (4) et les transmettre à l'unité d'évaluation (3), les données réelles spécifiques à la charge comprenant des ensembles de charges calibrés qui comprennent un temps de séjour de grandeurs de détérioration qui se produisent dans des niveaux de charge définis, un certain nombre de commutations en charge de grandeurs de détérioration qui se produisent et un comptage d'événements de grandeurs de détérioration qui se produisent ; et
- cadrer les données de référence spécifiques à la charge sur les données réelles spécifiques à la charge afin de calculer la détérioration théorique d'au moins un composant (1) et déterminer une durée de vie restante.

2. Procédé selon la revendication 1, **caractérisé en ce que** les données de référence spécifiques à la charge comprennent un grand nombre de valeurs de détérioration pour des niveaux de charge de référence discrets.

3. Procédé selon l'une des revendications précédentes, **caractérisé en ce que** les données de référence spécifiques à la charge comprennent au moins un mécanisme de panne de l'au moins un composant (1).

4. Procédé selon l'une des revendications précédentes, **caractérisé en ce que** les données de référence spécifiques à la charge sont regroupées dans au moins une structure de données.

5. Procédé selon l'une des revendications précédentes, **caractérisé en ce qu'**au moins un critère de défaillance de l'au moins un composant (1) est prévu dans l'unité d'évaluation (3).

6. Procédé selon l'une des revendications précédentes, **caractérisé en ce qu'**au moins une valeur seuil de détérioration est prévue dans l'unité d'évaluation (3) de sorte que, lorsque la valeur seuil de détérioration est atteinte, une demande d'action est envoyée par l'unité d'évaluation (3) à au moins une unité de réception (5).

7. Procédé selon l'une des revendications précédentes, **caractérisé en ce que** le fonctionnement du dispositif (2) est effectué en fonction de la détérioration théorique de l'au moins un composant (1).

8. Procédé selon l'une des revendications précédentes, **caractérisé en ce que** des points de fonctionnement déterminés sont évités en fonction de la détérioration théorique de l'au moins un composant (1).

9. Système de détermination immédiate d'une détérioration théorique d'au moins un composant (1) d'un dispositif (2) au moyen d'un procédé selon l'une des revendications 1 à 8, ledit système comprenant une unité d'évaluation (3) qui est prévue pour fournir des données de référence spécifiques à la charge, le système comprenant en outre un système d'acquisition de charge (4) destiné à acquérir des données réelles spécifiques à la charge, les données réelles spécifiques à la charge comprenant des ensembles de charges calibrés qui comprennent un temps de séjour de grandeurs de détérioration qui se produisent dans des niveaux de charge définis, un certain nombre de commutations de charge de grandeurs de détérioration qui se produisent, et un comptage d'événements de grandeurs de détérioration qui se produisent, les données réelles spécifiques à la charge étant destinées à être transmises à l'unité d'évaluation (3), l'unité d'évaluation (3) étant également prévue pour cadrer les données de référence spécifiques à la charge sur les données réelles spécifiques à la charge afin de déterminer la détérioration théorique et une durée de vie restante de l'au moins un composant (1).

10. Utilisation du système selon la revendication 9 dans une éolienne (2a).

11. Logiciel contenant des instructions lisibles par machine qui, lorsque le programme est exécuté par un ordinateur, ordonnent à celui-ci d'exécuter le procédé selon l'une des revendications 1 à 8.
